(19) Europäisches Patentamt
European Patent Office
Office européen des brevets

(11) **EP 1 958 393 B1**

(12) **FASCICULE DE BREVET EUROPEEN**

(45) Date de publication et mention
de la délivrance du brevet:
**16.09.2009 Bulletin 2009/38**

(21) Numéro de dépôt: **06830417.9**

(22) Date de dépôt: **06.12.2006**

(51) Int Cl.:
***H04L 12/56*** *(2006.01)*  ***H04L 12/24*** *(2006.01)*

(86) Numéro de dépôt international:
**PCT/EP2006/069376**

(87) Numéro de publication internationale:
**WO 2007/065911 (14.06.2007 Gazette 2007/24)**

(54) **PROCEDE ET DISPOSITIF DE CONTROLE A DISTANCE DE LA CONGESTION DE FLUX MAILLES DANS UN RESEAU DE TELECOMMUNICATION EN MODE PAQUET**

VERFAHREN UND VORRICHTUNG ZUR FERNSTEUERUNG DER ÜBERLAST BEI VERMASCHTEN STRÖMEN IN EINEM PAKETVERMITTELTEN TELEKOMMUNIKATIONSNETZ

METHOD AND APPARATUS FOR DISTANT CONGESTION CONTROL OF MESHED STREAMS IN A PACKET-SWITCHED TELECOMMUNICATIONS NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.12.2005 FR 0553814**

(43) Date de publication de la demande:
**20.08.2008 Bulletin 2008/34**

(73) Titulaire: **IPANEMA TECHNOLOGIES
92260 Fontenay aux Roses (FR)**

(72) Inventeurs:
• **GRENOT, Thierry
F-92190 Meudon (FR)**
• **BONNET, Florian
F-92240 L'Hay-les-Roses (FR)**
• **IMBERT, Bernard
78620 L'ETANG LA VILLE (FR)**
• **PROVOST, Jacques
F-91600 Savigny-sur-Orge (FR)**

(74) Mandataire: **Ilgart, Jean-Christophe et al
BREVALEX
3, rue du Docteur Lancereaux
75008 Paris (FR)**

(56) Documents cités:
**WO-A-01/58094**      **WO-A2-01/80485**
**WO-A2-20/04066567**

**Description**

DOMAINE TECHNIQUE

L'invention se situe dans le domaine des télécommunications et concerne plus spécifiquement un procédé de contrôle distant de la congestion de flux maillés échangés dans un réseau de télécommunication en mode paquet entre un nombre N sites centraux $C_i$ munis d'équipements de gestion de flux et un nombre M de sites distants $D_m$ ne comportant pas de tels équipements.

L'invention concerne également un dispositif destiné à mettre en oeuvre ce procédé.

L'invention s'applique quelle que soit l'étendue géographique du réseau, quel que soit le débit acheminé par celui-ci et quel que soit le nombre d'usagers de ce réseau. Il fonctionne en particulier dans le cas où des utilisateurs d'un même site distant $D_m$ communiquent simultanément avec plusieurs sites centraux $C_i$ formant ainsi des flux maillés.

L'invention est indépendante des technologies de réseau en mode paquet, mais est particulièrement adaptée aux réseaux utilisant le protocole IP (Internet Protocol) tels que par exemple le réseau Internet ou des réseaux VPN (pour Virtual Private Networks ou Réseaux Privés Virtuels). Ces derniers offrent une interconnexion au niveau IP de manière privative pour un groupe d'usagers donné (typiquement une entreprise ou une organisation ayant plusieurs établissements), tout en utilisant une infrastructure de réseau partagée (par exemple l'Internet).

ÉTAT DE LA TECHNIQUE ANTÉRIEURE

Les réseaux de télécommunication en mode paquet se **caractérisent en ce que** les informations acheminées sont véhiculées en groupes appelés paquets, essentiellement constitués d'un en-tête contenant les informations pour l'acheminement du paquet dans le réseau et des données à transmettre. Des informations d'adressage contenues dans les en-têtes permettent d'identifier des flux d'informations entre les applications finales. Ces paquets sont véhiculés à travers le réseau, et empruntent au gré de ce réseau des moyens de transmission et de commutation les plus variés. La technologie principalement utilisée actuellement pour ces réseaux de télécommunication en mode paquet est le protocole IP (Internet Protocol). Ce protocole est utilisé de bout en bout, et peut être véhiculé sur des réseaux de transmission très divers tels que par exemple des réseaux Ethernet, des réseaux FR (Frame Relay), des réseaux ATM (Asynchronous Transfer Mode), des réseaux SDH (Synchronous Digital Hierarchy), des réseaux SONET (Synchronous Optical Network), des réseaux MPLS (Multiprotocol Label Switching), ou encore des réseaux DWDM (Dense Wavelength Digital Multiplexing), etc.

Les paquets sont typiquement émis par un grand nombre de sources fonctionnant indépendamment les unes des autres, vers un grand nombre de destinations fonctionnant également indépendamment les unes des autres.

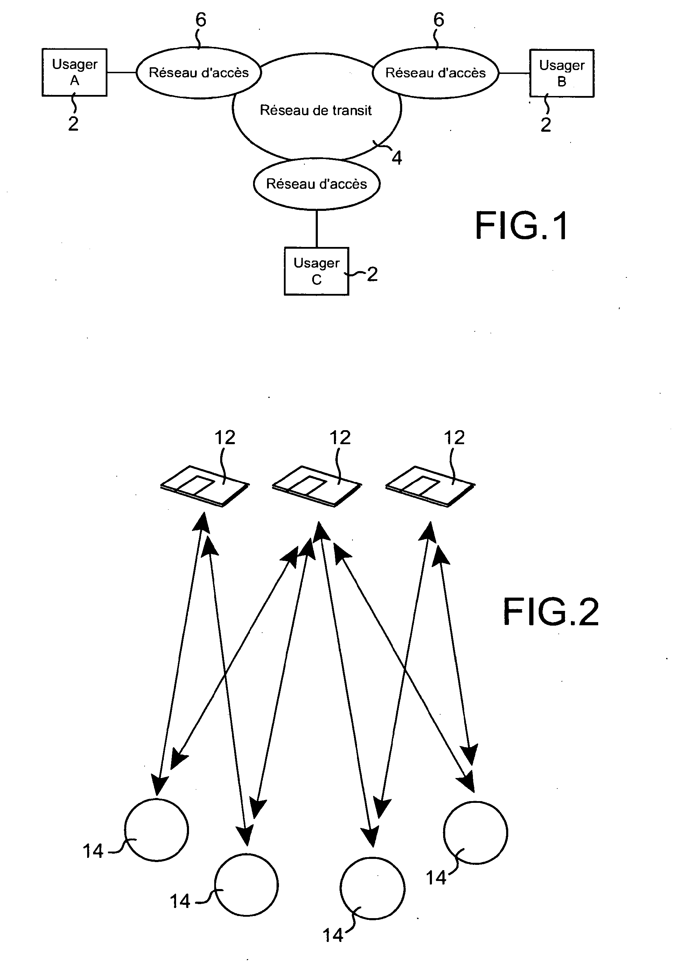

La figure 1 donne un exemple d'un tel réseau :

Les usagers 2 peuvent être soit des usagers individuels, soit des agences, des entreprises (ayant leur propre réseau local interne), etc.

Le réseau de transit 4 représente la partie centrale, généralement à grande capacité et couvrant un large territoire (le monde entier dans le cas du réseau Internet). Ce réseau est généralement partagé par une multitude d'usagers et/ou de réseaux privés.

Les réseaux d'accès 6 sont généralement à débit moyen ou lent, et partagés entre des usagers localisés dans une zone géographique limitée. La « boucle locale », lien filaire, optique, radio, etc. entre l'usager et le fournisseur du service d'accès est considérée par la suite comme faisant partie du réseau d'accès.

Qualité de service

La Qualité de Service est constituée par l'ensemble des caractéristiques pertinentes affectant le transfert des informations entre deux points donnés d'un réseau. Elle se définit notamment par :

- la qualité de l'accès au service ;
- la disponibilité du service ;
- le temps de remise en service en cas de défaillance ;
- la qualité du service de transfert d'information ;
- le délai de transfert des informations entre la source et la destination ;
- la variation du délai de transfert des informations (la gigue) ;
- la dégradation des informations véhiculées (pertes, erreurs) ;
- la quantité d'informations qui peut effectivement être véhiculée sur le réseau (bande passante).

L'étendue géographique, la forte mutualisation des équipements d'infrastructure entre de très nombreux usagers, la variété des flux échangés et la complexité des architectures déployées rendent très difficile la prédiction et la garantie de la Qualité de Service sur de tels réseaux.

Le débit qu'il est possible d'écouler entre deux usagers donnés, le délai de transfert des informations, la variation dans de temps de ce délai (la gigue) et le taux de perte associé sont des éléments fondamentaux de cette Qualité de Service. Seule leur maîtrise permet de déployer des services professionnels critiques (transport de la voix, des images, des transactions, des données critiques, commerce électronique, etc....).

Une façon courante d'améliorer la qualité du service est de sur-dimensionner la capacité du réseau. Cependant, étant donné le coût d'investissement et d'utilisation important de ces réseaux, on souhaite les utiliser au maximum, et une telle solution très onéreuse est donc d'usage limité.

Des dispositifs (protocoles, équipements de transmission, de commutation, de routage, etc.), dépendants de la nature des différents réseaux, peuvent être mis en oeuvre pour gérer ces éléments de Qualité de Service. Ils sont en général basés sur des mécanismes de priorité et de réservation de ressources à la demande (ATM, RSVP sur IP, ...) ou à la configuration (ATM, DiffServ sur IP, ...). Ces dispositifs ont en général une portée limitée à une partie du réseau seulement. En constante mutation, ils inter-opèrent difficilement.

Dans tous les cas, le résultat est fortement dépendant du comportement des usagers source : débit d'émission, régularité du trafic, matrice de trafic, etc..... Ce comportement est très difficile à prévoir, du fait de la grande variété des applications utilisant les réseaux (transport de la voix, d'images, transfert de fichier, consultation de bases de données, etc....), de la multiplicité des usagers mis en présence et de la large panoplie de leurs besoins.

Dans tous les cas également, le résultat est fortement dépendant des règles d'ingénierie et de la configuration des multiples paramètres du réseau. Ces règles sont très difficiles à déterminer, en particulier à cause de la taille des réseaux, de la grande variété des technologies mises en oeuvre à un moment donné (parc non homogène) et de la multiplicité des organisations (opérateurs d'accès au service, opérateurs de points de présence, transporteurs longue distance, etc.) impliquées d'un bout à l'autre du chemin.

Le phénomène de congestion dans les réseaux

La congestion est définie comme un état dans lequel l'usage de la ressource atteint la capacité maximum que cette ressource est capable de fournir. Dans le cas des réseaux, il s'agit essentiellement de la bande passante : une liaison ou un élément de liaison est congestionné lorsque le débit d'information approche, atteint voire essaye de dépasser le débit maximal que cette liaison ou cet élément de liaison est capable de véhiculer sans dégradation (perte d'information, retard ...).

La Qualité de Service est principalement liée à la congestion des différents éléments du réseau empruntés par les informations pendant leur transfert. Bien qu'il existe une infinité de gradations, on peut schématiser les cas de fonctionnement rencontrés par ces deux modes :

- Soit il n'y a aucune allocation de ressource, et le réseau fait au mieux pour relayer les informations jusqu'au destinataire, selon l'activité des sources ;
- Soit il y a un mécanisme d'allocation de ressource, et la quantité d'information injectée dans le réseau par chaque source est plus ou moins contrôlée.

Dans tous les cas, des systèmes de stockage temporaire en file d'attente (mémoires), situés à chaque point de multiplexage, de concentration ou de commutation, permettent de traiter les simultanéités d'arrivée des paquets. Le taux instantané d'occupation mémoire rencontré par un paquet et la politique de gestion (priorité, nombre de files d'attente, règle de vidage, rejet, ...) mise en oeuvre au niveau de chaque file d'attente déterminent le temps passé par un paquet dans ce dispositif, ainsi que son éventuel rejet.

Le délai de transfert entre deux points du réseau est dû :

- à la somme des temps de traversée des lignes, câbles, fibres optiques, liens satellites, etc. utilisés ; ce délai est en général fixe, et pour l'essentiel dépend du média et de la distance parcourue par l'information,
- à la somme des temps de traversée des files d'attente dans les différents équipements ; ce délai est dû globalement à la charge instantanée rencontrée par chaque paquet et aux politiques de gestion de ces files d'attente.

Par ailleurs, une charge instantanée trop forte provoque un rejet du paquet d'informations (perte), c'est ce phénomène qui explique principalement la perte des paquets.

On voit donc que le phénomène de congestion induit une grande imprédictibilité dans les échanges entre sources et destinations, empêchant ainsi toute garantie de bon fonctionnement pour les utilisateurs de tels réseaux.

Problématique de gestion de la congestion en environnement maillé

On définit une situation de maillage lorsque, à un moment donné, plusieurs sites sources indépendants émettent du trafic vers un même site destination, ou encore qu'un même site source émet du trafic vers plusieurs sites destination, ou toute combinaison de ces deux cas.

Gestion traditionnelle de traitement de la congestion

Les solutions connues dans l'art antérieur pour allouer les ressources, et singulièrement la bande passante dans un environnement point à point utilisent soit le mécanisme de priorité, implémenté à chaque élément de réseau (routeur), basé soit sur la définition de classes de service (Diffserv), soit le mécanisme de lissage du trafic (Traffic shaping) depuis un site central vers une ou plusieurs destination. Les critères de lissage peuvent être plus ou moins statiques et plus ou moins fins en fonction des implémentations. Les documents WO 2004 066 567 ("Limitation du trafic dans des réseaux orientés paquets à l'aide de valeurs limites dépendant des liaisons pour le trafic passant les limites du réseau") et WO 0 180 485 ("Procédé d'optimisation d'un réseau") décrivent des exemples connus en ce sens.

Ces solutions ne prennent pas directement en compte le maillage des flux. Ils sont complémentés par des règles statiques d'ingénierie et de dimensionnement. Les résultats en présence de maillage sont très approximatifs et le manque de contrôle qui leur est inhérent ne fournit pas de garantie de bon fonctionnement.

On connaît également une solution qui permet de prendre en compte les situations de type flux maillé, en coordonnant en temps réel les décisions prises par les équipements installés dans les différents sites sources et destinations. Une telle solution est décrite dans la demande de brevet français « *Procédé d'Optimisation Dynamique de la Qualité de Service dans un Réseau de Transmission de Données* » N°-FR 2.804.808 déposée par la demanderesse.

Cette solution permet en particulier de retrouver une prédictibilité des performances. Toutefois, elle nécessite d'équiper l'ensemble des sites, ce qui peut s'avérer complexe et/ou coûteux particulièrement dans le cas où un nombre réduit de sites centraux (typiquement des sièges internationaux, nationaux ou régionaux et des centres de données (data centers) échangent des informations avec un grand nombre de sites distants utilisateurs de données transmises par ces sites centraux (typiquement des agences), chacun de ces sites distants étant en relation avec un ou plusieurs sites centraux.

Le but de l'invention est de pallier les inconvénients de l'art antérieur décrits ci-dessus.

EXPOSÉ DE L'INVENTION

L'invention préconise un procédé de contrôle distant de la congestion de flux maillés échangés dans un réseau de télécommunication en mode paquet entre un nombre N sites centraux $C_i$ munis d'équipements actifs de gestion de flux et un nombre M de sites distants $D_m$ dépourvus de tels équipements, lesdits sites centraux échangent entre eux des informations destinées spécifiquement à la gestion des flux échangés entre chacun des sites centraux et chacun des sites distants.

Le procédé selon l'invention comporte les étapes suivantes :

a0- associer dynamiquement chaque site distant à un sous-ensemble de sites centraux en fonction du trafic réellement constaté,

- établir une matrice de trafic dynamique indiquant, pour chaque site distant, le groupe de sites centraux échangeant des données avec ce site distant pendant une période d'observation donnée,
- échanger entre les différents sites centraux de chaque groupe des informations minimales sur le trafic temps réel avec chacun desdits sites distants,
- définir à partir des informations échangées à l'étape précédente une image locale indiquant l'état de précongestion pour le trafic de chaque site distant (14),
- calculer des règles de gestion du trafic de (respectivement vers) chaque site distant en fonction de l'image définie à l'étape précédente.

Préférentiellement, la gestion des flux comporte les étapes préalables suivantes :

- configurer automatiquement les équipements actifs des sites centraux en fonction de ces regroupements dynamiques,
- pour chaque site distant, coordonner les équipements actifs des sites centraux de manière à gérer en temps réel le trafic à destination ou en provenance des mêmes situes centraux vers/de ce site distant.

Selon un mode préféré de mise en oeuvre, le procédé selon l'invention comporte les étapes suivantes :

Dans ce mode de réalisation, pour chaque site distant et pour chaque session d'échange de données de (respectivement vers) ce site distant, le calcul des règles de gestion du trafic est exécuté localement dans chaque site central et comporte les étapes suivantes :

- détecter des précongestions proches de la capacité maximale d'échange de (respectivement vers) ce site,
- répartir les ressources de transmission entre les différentes sessions d'échange de données en fonction des états de précongestion détectée, de la nature et du nombre de ces sessions.

Dans une variante préférée de réalisation, l'exécution de l'étape l'établissement d'une matrice de trafic dynamique est distribuée entre les équipements actifs de gestion de flux des différents sites centraux de sorte que chaque site central $C_k$ :

- détermine une liste de sites distants $D_m$ avec lesquels il a échangé de l'information pendant la période d'observation,
- échange périodiquement ladite liste avec tous les autres sites centraux,
- constitue une base $\{M_{im}\}$ d'information qui est la matrice sur l'ensemble des sites centraux $C_i$ et des sites distants $D_m$,
- déduit, pour chaque site distant n, les sites centraux $(C_{kn})$ avec lesquels le site distant a échangé des informations pendant la durée d'observation considérée.

Dans cette variante de réalisation, l'établissement d'une matrice de trafic dynamique est exécutée périodiquement durant une première boucle de traitement ayant une durée adaptée pour établir une matrice de trafic agrégée tenant compte de la superposition de tous les types trafics pendant ladite période, les échanges d'informations entre les sites centraux et la définition d'une image locale indiquant l'état de précongestion sont exécutées périodiquement durant une deuxième boucle de traitement ayant une durée courte par rapport à la première boucle de traitement, et adaptée pour établir une matrice du trafic en temps réel de manière à détecter en temps réel les différents états de congestion, et le calcul des règles de gestion du trafic est exécuté périodiquement durant une troisième boucle de traitement ayant une durée très courte par rapport aux durées d'exécution des première et deuxième boucles de traitement de manière à réguler en temps réel le trafic en fonction du type et de la quantité de flux échangés entre les sites centraux et les sites distants.

Dans une autre variante de réalisation, l'exécution de l'étapes a) est gérée par un équipement de gestion centrale de la manière suivante :

- Chaque équipement actif de chaque site central effectue une mesure d'activité pour le trafic entre lui-même et chaque site distant, pour les deux sens de communication.
- l'équipement de gestion centralisée relève périodiquement les informations de trafic sur tous les équipements actifs de chaque site central,
- l'équipement de gestion centralisée en déduit pour chaque site distant la liste des sites centraux avec lesquels il échange des informations,
- l'équipement de gestion centralisée communique à l'équipement actif de chaque site central lesdites listes.

Le procédé selon l'invention est particulièrement adapté (mais pas exclusivement) à des réseaux privés (virtuel ou non), composé d'un grand nombre M de sites distants (typiquement plusieurs centaines à plusieurs milliers) et d'un nombre N plus limité de sites centraux (typiquement quelques dizaines) (sièges et data centers) : banques, assurances, réseaux de location de véhicule, grande distribution, grandes entreprises industrielles

L'invention concerne également un dispositif de contrôle distant de la congestion de flux maillés échangés dans un réseau de télécommunication en mode paquet entre un nombre N de sites centraux $C_i$ munis d'équipements de gestion de flux et un nombre M de sites distants $D_m$ dépourvus de tels équipements, le nombre N de sites centraux $C_i$ étant petit par rapport au nombre M de sites distants $D_m$.

Le dispositif selon l'invention comporte :

- des moyens pour établir une matrice de trafic indiquant, pour chaque site distant, le groupe de sites centraux échangeant des données avec ce site distant pendant une période d'observation donnée,
- des moyens pour échanger entre les différents sites centraux de chaque groupe des informations minimales sur le trafic temps réel avec chacun desdits sites distants,
- des moyens pour définir à partir des informations échangées une image locale indiquant l'état de congestion au niveau de chaque site distant,
- des moyens pour calculer et appliquer des règles de gestion du trafic de (respectivement vers) chaque site distant en fonction de l'image définie.

Lesdits moyens pour établir une matrice de trafic sont agencés soit dans chaque site central, soit dans un équipement de gestion centrale.

BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :

- la figure 1 représente schématiquement une structure générale d'un réseau de télécommunication,
- la figure 2 représente schématiquement un modèle d'architecture réseau dans lequel est mis en oeuvre le procédé selon l'invention,
- la figure 3 représente un réseau conforme au modèle de la figure 2 comportant des sites centraux et des sites distants mettant en oeuvre le procédé selon l'invention,
- la figure 4 représente schématiquement des flux de données échangés entre deux sites centraux et trois sites distants dans le réseau de la figure 3,
- la figure 5 représente les étapes essentielles du procédé selon l'invention,
- la figure 6 représente une matrice de trafic obtenue par le procédé selon l'invention,
- la figure 7 illustre schématiquement la constitution, selon l'invention, de groupes de sites centraux à partir de la matrice de trafic de la figure 6.
- la figure 8 est un schéma bloc illustrant les étapes de construction d'une image locale de l'activité d'un site distant selon l'invention,
- la figure 9 est un schéma bloc illustrant les étapes de calcul de la bande passante par les sites centraux selon l'invention,
- la figure 10 illustre la détection, selon l'invention, d'un point de congestion potentielle dans le réseau de la figure 4,
- la figure 11 illustre schématiquement l'enchaînement du conditionnement du trafic vu d'un site central selon l'invention.

EXPOSÉ DÉTAILLÉ DE MODES DE RÉALISATION PARTICULIERS

La description qui suit concerne une application de procédé dans un contexte représenté par la figure 2 illustrant le cas où un nombre faible de sites centraux 12 tels que par exemple des sièges internationaux, nationaux ou régionaux et des centres de données (data centers) échangent des informations avec un grand nombre de sites utilisateurs distants 14 tels que par exemple des agences, chacun de ces sites distants 14 étant en relation avec un sous-ensemble de sites centraux 12.

Dans ce type d'architecture, il y a deux besoins importants à satisfaire simultanément :

- maîtriser la performance perçue par les utilisateurs des sites distants 14, en dépit de la complexité générée par le maillage des flux (communications simultanées de/vers plusieurs sites centraux).
- limiter le nombre d'équipements actifs chargés de la gestion de trafic, de manière à simplifier et obtenir un déploiement ayant un coût faible.

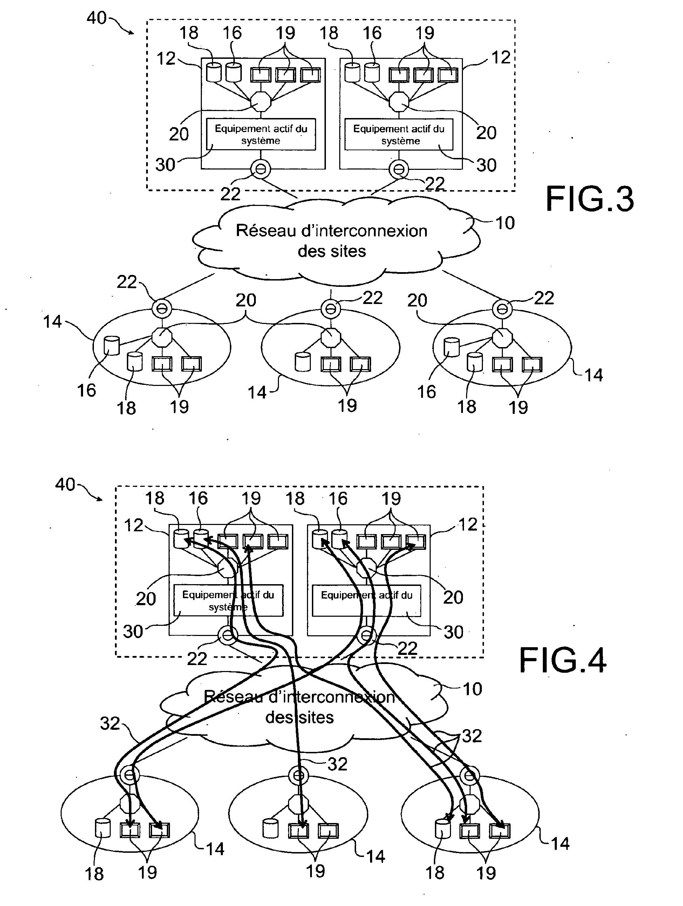

La figure 3 représente un réseau d'interconnexion 10, utilisant le protocole IP par exemple, qui interconnecte un ensemble de deux sites centraux ($C_i$) 12 avec un ensemble de trois sites distants ($D_m$) 14. La ou les technologies employées au sein de ce réseau d'interconnexion sont quelconques par exemple : MPLS, Frame Relay, ATM, ADSL...

Chaque site central 12 comporte typiquement un ou plusieurs serveurs applicatifs 16 et une ou plusieurs bases de données 18 communs à plusieurs utilisateurs. Les sites centraux 12 peuvent également comporter des postes de travail utilisateurs 19. Tous ces éléments sont connectés à un concentrateur ou commutateur de réseau local 20. Un équipement d'accès au réseau d'interconnexion 22, appelé général en CPE (pour Customer Premises Equipment) assure l'interface entre le réseau 10 et les sites centraux 12.

Chacun des sites centraux 12 est muni d'un équipement actif 30 destiné à contrôler à distance les sites distants 14.

Chaque site distant 14 comporte typiquement des postes de travail utilisateur 19, mais éventuellement aussi un ou plusieurs serveurs applicatifs 16, et une ou plusieurs bases de donnée 18 pour les utilisateurs du site. Tous ces éléments sont typiquement connectés à un concentrateur ou commutateur de réseau local 20. Un équipement d'accès au réseau d'interconnexion (CPE) 22 assure l'interface entre le réseau 10 et le site distant 14.

Le trafic entre sites

Pour la mise en oeuvre du procédé selon l'invention, on suppose que le principal trafic via le réseau 10 est constitué d'échanges unidirectionnels ou bidirectionnels entre les sites centraux 12 et les sites distants 14. Ces derniers étant supposés dépourvus d'équipements actifs.

Le trafic dans le réseau 10 est illustré schématiquement par les flèches 32 de la figure 4.

En particulier :

- un site distant 14 peut échanger un flux simultanément avec plusieurs sites centraux 12,
- un site central 12 peut échanger un flux simultanément avec plusieurs sites distants 14,
- les sites centraux 12 peuvent échanger un flux simultanément entre eux,
- les sites distants 14 n'échangent pas un flux entre eux.

On considère également que le trafic entre les différents sites centraux 12 et les sites distants 14 est dynamique, c'est-à-dire qu'il change rapidement à la fois dans l'espace (changement des sites qui échangent entre eux), dans le volume, (changement de la quantité d'information à échanger) et dans leur nature (changement du type des informations qui sont échangées).

Le système de contrôle

Chaque équipement actif 30 est installé de manière à :

- avoir connaissance du trafic entre le site central 12 sur lequel il est installé et les sites distants 14 ;
- avoir connaissance de l'éventuel trafic de/vers les autres sites centraux 12 ;
- pouvoir communiquer avec les autres équipements actifs, par exemple mais pas nécessairement à travers le réseau 10 ;
- pouvoir intercepter le trafic utilisateur du site central 12 de manière à le réorganiser en cas de besoin.

Ces équipements actifs 30 sont typiquement constitués par :

- une unité centrale et la mémoire morte et vive nécessaire à l'exécution du logiciel ;
- des interfaces réseaux pour capturer et réinjecter le trafic utilisateur ;
- des interfaces réseaux pour communiquer entre eux (celles-ci peuvent être les mêmes interfaces que les interfaces de capture et de réinjection du trafic utilisateur) ;
- un logiciel intégré permettant de communiquer, d'exécuter des algorithmes de calcul, de prendre des décisions et de les appliquer.

Dans une première variante de réalisation, les équipement actifs agissent entre eux sans faire appel à un dispositif central.

Dans une deuxième variante de réalisation, les équipements actifs interagissent avec un logiciel central connecté en un point quelconque du réseau 10 et avec lequel ils peuvent échanger des informations.

Principes du contrôle à distance des flux maillés

Dans un mode préféré de réalisation, le procédé selon l'invention comporte les étapes suivantes :

- associer dynamiquement chaque site distant 14 à un sous-ensemble des sites centraux 12 en fonction du trafic réellement constaté,
- configurer automatiquement les équipements actifs 30 des sites centraux 12 en fonction de ces regroupements dynamiques,
- coordonner les équipements actifs des sites centraux 12 de manière à gérer en temps réel le trafic à destination ou en provenance des mêmes sites distants 14.

Le contrôle à distance des flux maillés est ensuite effectué par l'ensemble des équipements actifs qui collaborent en temps réel.

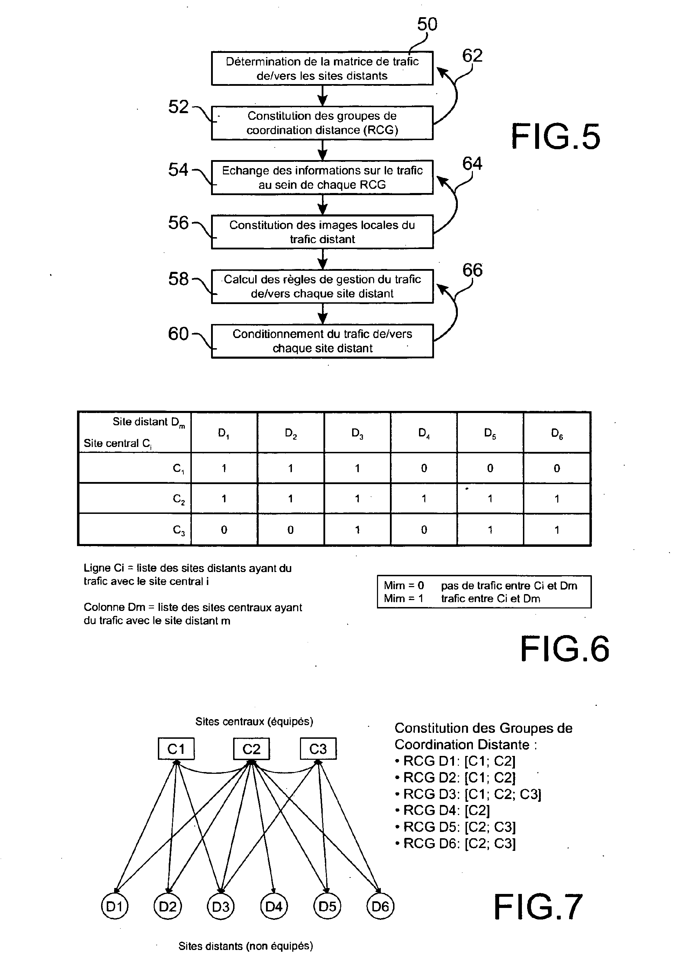

La figure 5 illustre les étapes d'un exemple particulier de mise en oeuvre du procédé selon l'invention.

Ces étapes consistent à :

- déterminer la matrice du trafic entre les sites centraux 12 et les sites distants 14 à moyen/long terme (étape 50),
- établir (étape 52) des Groupes de Coordination Distants 40 (voir figures 3 et 4) (RCG : Remote Coordination Group) comportant l'identité du site distant 14 qui doit être contrôlé depuis les sites centraux 12, la liste des sites centraux 12 ayant régulièrement du trafic avec ce site distant 14 et qui doivent donc se coordonner pour garantir la meilleure allocation des ressources,
- échanger des informations sur le trafic en temps réel entre les équipements actifs 30 des sites centraux 12 d'un même groupe 40 (étape 54),
- constituer sur chaque équipement actif 30 l'image locale du trafic de chaque site distant 14 (étape 56),
- déterminer les règles de gestion du trafic par les équipements actifs 30 des sites centraux 12 (étape 58),
- conditionner le trafic entrant et sortant par les équipements actifs 30 des sites centraux 12 (étape 60).

Les étapes décrites ci-dessus sont exécutées en trois boucles, une première boucle 62 de gestion à moyen/long terme, une deuxième boucle 64 de gestion à court terme et une troisième boucle 66 de contrôle à très court terme. C'est l'association de ces trois processus en boucle fermée, combinés au comportement du réseau et des applications, qui assure le bon fonctionnement de l'ensemble et permet le contrôle des trafics maillés.

Détermination de la matrice de trafic à moyen/long terme (étape 50)

Cette étape 50 consiste à déterminer, pour chaque site distant 14, les sites centraux 12 avec lesquels ledit site distant 14 échange des donnés.
Il s'agit essentiellement d'observer le trafic en provenance et à destination de chaque site distant 14 et de le classifier en fonction du ou des sites centraux 12.
Notons que dans la plupart des situations réelles, cette observation peut être réalisée sur une période de temps assez longue (par exemple un jour, ou une semaine). En effet, on recherche la matrice de trafic agrégée, c'est-à-dire la matrice reflétant la superposition de tous les trafics sur la période considérée.
La détermination de cette matrice de trafic peut être réalisée de manière centralisée ou de manière décentralisée.
Dans la variante centralisée,

- Chaque équipement actif 30 de chaque site central 12 effectue une mesure d'activité pour le trafic entre lui-même et chaque site distant 14, pour les deux sens de communication.
- un équipement de gestion centralisée relève périodiquement les informations de trafic sur les équipements actifs de chaque site central 12,
- cet équipement de gestion centralisée en déduit pour chaque site distant 14 la liste des sites centraux 12 avec lesquels il échange des informations,
- l'équipement de gestion centralisée communique à l'équipement actif 30 de chaque site central 12 lesdites listes.

Après classification et agrégation, l'équipement de gestion centrale est alors capable de déterminer la matrice de trafic concernant chaque site distant 14. Cette matrice indique la liste des sites centraux 12 avec lesquels le site distant 14 a échangé des informations pendant la période considérée.
La variante centralisée est bien adaptée aux cas où la matrice de trafic est stable, c'est-à-dire variant peu dans le temps, ce qui est le cas le plus général dans la mesure où les sites centraux 12 sont souvent bien identifiés et subissant peu de modifications.
Dans la variante décentralisée, ce sont les sites centraux $C_i$ 12 qui effectuent les traitements décrits ci-dessus :
Chaque équipement actif 30 de site central $C_i$ 12

- détermine la liste des m (m étant un nombre entier) sites distants $D_m$ 14 avec lesquels il a échangé de l'information sur la période d'observation considérée pour les deux sens de communication,
- échange périodiquement cette liste de site avec tous les autres équipements actifs 30 de sites centraux 12, et
- constitue une base d'information qui est la matrice sur l'ensemble des N sites centraux 12 et des M sites distants 14 : $\{M_{NM}\}$.
- déduit, pour chaque site distant n parmi les M sites, les sites centraux k concernés ($M_{kn}$).

La variante décentralisée présente l'avantage d'un mécanisme totalement distribué, ne nécessitant pas de fonction centrale, mais nécessite toutefois des flux supplémentaires de signalisation entre les sites centraux 12.
Dans le cas probable d'une évolution lente des correspondances entre sites centraux $C_i$ et sites distants $D_m$, la période $T_1$ d'émission de ces flux peut être maintenue à un niveau très bas (par exemple, un échange d'information toutes les heures entre les sites centraux 12, ce qui ne présentera pas une charge supplémentaire significative sur le réseau 10.

La figure 6 illustre un exemple de matrice de trafic obtenue par le procédé selon l'invention.

Cette matrice comporte une ligne contenant tous les sites distants 14 et une colonne contenant tous les sites centraux 12. Les intersections chaque de ligne et de chaque colonne contient un "1" si lesdits sites échangent des données et un "0" sinon.

Constitution des Groupes de Coordination Distante 40 (étape 52)

Un Groupe de Coordination Distante RCG 40 (pour Remote Coordination Group) est composé de :

- l'identité du site distant 14 qui doit être contrôlé depuis les sites centraux 12,
- la liste des sites centraux 12 ayant régulièrement du trafic avec ce site distant 14, et qui doivent donc se coordonner pour garantir la meilleure allocation des ressources.

La figure 7 illustre schématiquement la constitution d'une matrice de trafic à moyen terme ainsi que les RCG 40 correspondant.

Notons que les RCG 40 peuvent être directement déduits de la matrice de trafic par les équipements actifs (cf. figure 6). Ils évoluent à la vitesse de cette matrice (moyen/long terme), et leur constitution ne crée donc pas de charge significative de traitement interne au système.

Notons également que le trafic entre sites centraux 12 ne rentre pas en ligne de compte à ce stade, car il est ici supposé être traité par les mécanismes « classiques » de contrôle du trafic entre sites centraux.

Échange des informations sur le trafic temps réel entre les équipements actifs des sites centraux 12 (étape 54)

Cette étape est réalisée par chacun des équipements actifs des sites centraux 12, pour chaque RCG 40 auxquels ils appartiennent.

Elle prend en compte les aspects temps réel du trafic concernant la matrice de trafic instantanée, la nature de ce trafic et le nombre d'utilisateurs actifs.

Une contrainte de cette étape est de trouver le meilleur équilibre possible entre les deux contraintes suivantes :

- échanger des flux aussi rapidement que nécessaire pour, d'une part être, capable de détecter les différents états de congestion, et d'autre part, réguler les flux en fonction de leur nature et de leur importance ;
- échanger aussi peu d'information que possible pour limiter la charge de réseau et ainsi garantir l'évolution (augmentation) de la taille du système et permettre d'atteindre de très grands déploiements.

Dans la suite de la description, le trafic sera catégorisé en « Classes » qui sont définies fonction de la nature et de l'importance, notamment économique, des applications. Cette classification dépend bien entendu de l'activité et des applications de chaque organisation. Par exemple :

- Classe 1 : trafic voix - critique,
- Classe 2: trafic vidéo - moyennement critique,
- Classe 3: trafic transactionnel critique,
- Classe 4: trafic transactionnel non critique,
- Classe 5: trafic Internet - moyennement critique,
- Classe 6: transfert de fichier - peu critique.

On définit une « Session » comme l'association d'un poste utilisateur et d'un serveur (ou d'un autre poste utilisateur, ou entre deux serveurs ...) à travers le réseau 10, et qui échangent des informations pour exécuter une application donnée (conversation téléphonique, transfert de données, accès à un site Web ...). La location et/ou l'identité du poste de travail et/ou du serveur et/ou de l'application permet de faire correspondre la session avec sa Classe. Notons également qu'il peut y avoir de nombreuses sessions différentes entre deux mêmes sites. Par ailleurs, un même poste utilisateur peut être impliqué simultanément dans plusieurs sessions.

Nature des échanges

Soit le groupe de coordination distante $RCG_m$, relatif au site distant m. Les échanges visent au moins deux buts : la détection des congestions et la régulation fine des flux.

• <u>Détection des congestions</u> :

Chaque équipement actif de site central $C_i$ membre de ce groupe $RCG_m$ émet périodiquement vers les autres équipements actifs sur les sites centraux du groupe au moins les informations suivantes :

- $TC_iD_m$ : débit émis par le site central i vers le site distant m (bit/s),
- $TD_mC_i$ : débit reçu par le site central i du site distant m (bit/s).

• <u>Régulation fine des flux</u> :

Chaque équipement actif de site central $C_i$ membre du groupe émet également vers les autres équipements actifs des sites centraux du groupe les informations suivantes :

- $S_kC_iD_m$ : nombre de sessions actives de la classe K du site central i vers le site distant m,
- $S_kD_mC_i$ : nombre de sessions actives de la classe K du site distant m vers le site central i.

La période $T_3$ d'émission de ces informations doit être relativement courte, car elle doit permettre de suivre les évolutions du trafic en temps réel. Dans les réseaux actuels, on peut considérer qu'une période d'environ une à quelques secondes est convenable.

Quantification des échanges

Supposons un site distant $D_m$ tel que, à un instant donné :

- il soit actif de/vers C sites centraux $C_i$ simultanément (les membres du $RCG_m$);
- les sessions soient bidirectionnelles de/vers chacun des sites centraux $C_i$ ;
- il ait $K_i$ classes de trafic active de/vers chacun des sites centraux $C_i$ ;
- chaque information. TCD et TDC ait une longueur $L_t$ octets ;
- chaque information SCD et SDC ait une longueur $L_s$ octets ;

Pour le contrôle du $RCG_m$, chaque équipement actif de site central $C_i$ impliqué va avoir à générer avec une période $T_3$ un message (ou un ensemble de messages) vers chacun des (C-1) autres sites centraux, dont la longueur totale est :
Débit pour chaque sens + nombre de sessions actives pour chaque classe et pour chaque sens = 2 * ($L_t$ + $K_i$ * $L_s$)

Au total, le site central $C_i$ émet donc [1/$T_3$ * (C-1) * 2 * ($L_t$ + $K_i$ * $L_s$) * 8] bits/seconde de messages concernant le site distant $D_m$.

Exemple d'application numérique :

$T_3$ = 1 seconde
C = 4 sites centraux membres du RCG
$K_i$ = 4 classes de trafic actives entre $D_m$ et $C_i$.
$L_t$ = 2 octets
$L_s$ = 2 octets

Débit total des messages issus de $C_i$ = 1 * 3 * 2 * (2 + 4*2) * 8 = 480 bit/s

On remarque que cette valeur est particulièrement modeste au regard des débits usuellement disponibles dans les sites centraux (actuellement plusieurs Mbit/s à plusieurs Gbit/s).

Constitution des images du trafic (étape 56)

Image locale de l'activité locale

Chaque équipement actif 30 de site central 12 constitue une image de son activité propre pour les flux de données de/vers tous les sites distants 14 et tous les autres sites centraux 12.

Cette étape ne nécessite aucun échange d'information avec d'autres équipements.

Soit un site central $C_i$, ce site va construite l'image $IL_i$ de son activité locale qui est constituée au moins par :

- $Teg_i$ : Débit total allant du réseau d'interconnexion 10 vers le site central $C_i$,

- $Tig_i$ : Débit total provenant du site central $C_i$ vers le réseau d'interconnexion 10,
- $Seg_{k;i;\ i}$ : Nombre total de sessions actives pour chaque classe k de trafic et allant du réseau d'interconnexion 10 vers le site $C_i$,
- $Sig_{r;i;\ i}$ : Nombre total de sessions actives pour chaque classe k de trafic et provenant du site $C_i$ vers le réseau d'interconnexion 10.

En numérotant les classes de trafic K de 1 à $K_{max}$, on a :
$IL_i = \{ Teg_i \ ; Tig_i \ ; Seg_{1,i} \ ; Seg_{2,i} \ ; ... Seg_{Kmax,i} \ ; Sig_{1,i} \ ; Sig_{2,i} \ ; ... Sig_{kmax,i}\}$

Image locale de l'activité distante

Dans cette étape, chaque équipement actif 30 de site central 12 va reconstituer une image de l'activité globale de chaque site distant 14 pour lequel il est membre du RCG 40. Cette image prend en compte l'activité des flux de données du site distant 14 de/vers tous les sites centraux 12.

Il est important de noter que dans cette étape, il n'y a pas d'échange avec les autres membres du RCG 40 et que l'on utilise les informations régulièrement échangées dans l'étape 54.

Soit le site central $C_i$, appartenant au $RCG_m$ du site distant $D_m$. Le site $C_i$ va construire l'image $ID_{im}$ de l'activité du site distant $D_m$ qui est constituée au moins par :

- $Teg_m$ : Débit allant du réseau d'interconnexion 10 vers le site distant $D_m$,
- $Tig_m$ : Débit venant du site distant $D_m$ vers le réseau d'interconnexion,
- $Seg_{k,m}$ : Nombre de sessions actives pour chaque classe k de trafic et allant du réseau d'interconnexion 10 vers le site $D_m$,
- $Sig_{k,m}$ : Nombre de sessions actives pour chaque classe k de trafic et venant du site $D_m$ vers le réseau d'interconnexion 10.

En numérotant les classes de trafic K de 1 à $K_{max}$, on a :
$ID_{im} = \{ Teg_m \ ; Tig_m \ ; Seg_{1,m} : Seg_{2,m} \ ; ... Seg_{kmax,m} \ ; Sig_{1,m} \ ; Sig_{2,m} \ ; ... Sig_{kmax,m}\}$

Les différentes images $ID_{im}$ de l'activité du site distant $D_m$ constituées localement à chaque site central $C_i$ membre du groupe $RCG_m$ doivent être aussi identiques que possible.

Construction de l'image locale de l'activité distante

L'image $ID_{im}$ bâtie par l'équipement actif 30 du site central $C_i$ et représentant l'activité du site distant $D_m$ est élaborée à partir des deux opérations suivantes:

- Consolidation,
- Filtrage.

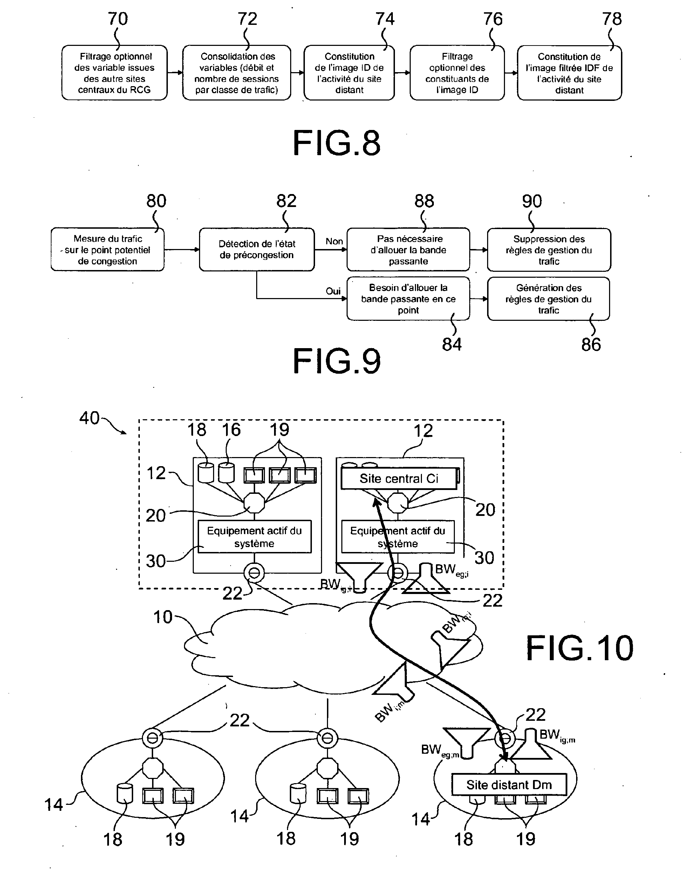

La figure 8 illustre schématiquement l'enchaînement des opérations permettant d'obtenir l'image locale de l'activité distante.

Cet enchaînement comporte les opérations suivantes :

- filtrage des variables issues des autres sites centraux 12 d'un groupe RCG 40 (étape 70). Cette étape est optionnelle.
- consolidation des variables (débits et nombres de sessions par classe de trafic) (étape 72).
- constitution de l'image ID de l'activité di site distant 14 (étape 74).
- filtrage des constituants de l'image ID (étape 76). Cette étape est également optionnelle.
- constitution de l'image filtrée IDF de l'activité du site distant 14 (étape 78).

Consolidation de $ID_{im}$ :

- $Teg_m$ = somme des débits allant vers $D_m$ et mesurés par les membres du $RCG_m$ = $\Sigma\ TC_jD_m$ pour tout $C_j$ du $RCG_m$ y compris le site central $C_i$ lui-même,
- $Tig_m$ = somme des débits venant de $D_m$ et mesurés par les membres du $RCG_m$ = $\Sigma\ TD_mC_j$ pour tout $C_j$ du $RCG_m$ y compris le site central $C_i$ lui-même,
- $Seg_{k,m}$ = somme des sessions actives pour chaque classe K de trafic et allant vers $D_m$, mesurées par les membres

du $RCG_m = \Sigma S_k C_j D_m$ pour tout $C_j$ du $RCG_m$ y compris le site central $C_i$ lui-même,

- $Sig_{k,m}$ = somme des sessions actives pour chaque classe K de trafic et venant de $D_m$, mesurées par les membres du $RCG_m = \Sigma S_k D_m C_j$ pour tout $C_j$ du $RCG_m$ y compris le site central $C_i$ lui-même.

Filtrage de $ID_{im}$ :

De manière à absorber les irrégularités et asynchronismes liées aux périodes de mesure et aux délais de transmission des informations, il peut être nécessaire de réaliser un filtrage de type « passe bas » sur les différentes variables.

Différentes méthodes de filtrage peuvent être utilisées. Par exemple la moyenne exponentielle permettant un filtrage rapide en calcul et peu coûteux en mémoire, et qui est définie par la formule :

$$VF_n = [(Q-1)*VF_{n-1} + Vn] * 1/Q,$$

avec les conventions de notation suivantes :

$VF_n$ = variable V filtrée à l'instant n
$VF_{n-1}$ = variable V filtrée à l'instant n-1
$V_n$ = variable V avant filtrage à l'instant n
Q = coefficient de filtrage

Nous noterons maintenant $IDF_{im}$ l'image filtrée de l'activité du site distant $D_m$ telle que reconstituée par le site central $C_i$. Pour ne pas surcharger les notations, nous ne modifierons pas les indices des différents constituants de $IDF_{im}$.

Notons que ce filtrage peut être réalisé également sur chaque variable reçue des autres sites centraux 12, préalablement au calcul de l'image $ID_{im}$.

Précision recherchée

Les délais de transmission des informations échangées dans l'étape 54 et d'autres sources d'incertitudes (arrondis, etc.) vont être la cause de légères différences entre les différentes images $IDF_{im}$ de l'activité du site $D_m$ constituées par les différents membres $C_i$ du $RCG_m$.

Il est toutefois nécessaire d'assurer que ces différences soient aussi faibles que possible. Dans la pratique, un écart relatif de quelques pourcents conduira à de bons résultats.

Il y a donc lieu de rechercher le bon compromis liant la variabilité du trafic, la période d'émission des informations au sein du RCG 40 et les coefficients de filtrage.

Calcul des règles de la bande passante par les sites centraux (étape 58)

Dans cette étape, chaque site central calcule ses règles de gestion du trafic à partir de son image filtrée IDF de l'activité globale des sites distants pour lesquels il est membre du RCG, et de l'image IL de son activité locale.

Notons que dans cette étape, il n'y a pas d'échange avec les autres membres du RCG. On utilise uniquement les images IL et IDF construites à partir des informations régulièrement échangées dans l'étape 54.

Cette étape est composée de deux opérations principales :

- Détection des précongestions
- Allocation des ressources

La figure 9 illustre schématiquement l'enchaînement des opérations permettant d'obtenir le calcul des règles d'allocation de la bande passante.

Cet enchaînement comporte les opérations suivantes :

- mesure du trafic sur le point potentiel de congestion (étape 80).
- détection de l'état de précongestion (étape 82).

Si une précongestion est détectée, décider (étape 84) que des ressources en bande passante doivent être allouées au point potentiel de précongestion, et générer des règles de gestion de trafic (étape 86).

Si aucune précongestion n'est détectée, décider (étape 88) qu'il n'est pas nécessaire d'allouer des ressources en bande passante au point potentiel de précongestion, et supprimer les règles de gestion de trafic (étape 90).

Détection des états de précongestion

La congestion du site $D_m$ est définie comme un état dans lequel le débit (en entrée et/ou en sortie) est égal ou trop proche de la capacité maximale autorisée par le réseau d'interconnexion 10, ce qui introduit une mauvaise qualité de service.

Le procédé selon l'invention permet d'anticiper ces états de congestion.

Pour un site donné, les différentes congestions sont modélisées en les ramenant aux trois situations suivantes dans le réseau d'interconnexion:

- l'accès réseau vers site;
- l'accès site vers réseau;
- la capacité du réseau en transit entre le site et chacun des autres sites.

Pour empêcher les congestions réseau, il faut donc détecter les états de précongestion pour lesquels le débit se rapproche de la capacité maximale, mais sans avoir encore atteint l'état de congestion.

L'opération de détection de la précongestion effectuée par le site $C_i$ consiste à déterminer s'il y a une précongestion et si c'est le cas, déterminer son type parmi les trois précédents.

Plusieurs principes de détection de la congestion peuvent être utilisés sans sortir du cadre de l'invention. En particulier, la détection peut être réalisée à partir de la mesure du débit effectif ou à partir de la mesure de la qualité tel que décrit dans le brevet *N° 2,804,808* de la demanderesse. Ces principes peuvent d'ailleurs être combinés.

Le principe de détection par mesure des débits va maintenant être décrit à titre d'exemple.

La capacité effective du réseau aux différents accès (site central, site distant, entre sites) pour chaque sens de communication est supposée préalablement connue par des moyens extérieurs (déclaration statique, apprentissage, etc.).

Soient les capacités suivantes :

- $BW_{eg}$, représentant la capacité de l'accès au site considéré dans le sens réseau vers site,
- $BW_{ig}$, représentant la capacité de l'accès au site considéré dans le sens site vers réseau,
- $BW_{r,s}$, représentant la capacité de transfert du site r vers le site s.

Soient les marges relatives de sécurité suivantes, comprises dans l'intervalle [0%, 100% ] :

$M_{eg}$ = marge de sécurité relative pour prévenir la congestion de l'accès réseau vers site
$M_{ig}$ = marge de sécurité relative pour prévenir la congestion de l'accès site vers réseau
$M_{r,s}$ = marge de sécurité relative pour prévenir la congestion du site r vers le site s

Soient les états de précongestion suivants (booléens, = VRAI si l'état de précongestion est détecté, FAUX dans le cas contraire) :

$PC_{eg}$ = précongestion de l'accès au site considéré dans le sens réseau vers site
$PC_{ig}$ = précongestion de l'accès au site considéré dans le sens site vers réseau
$PC_{r,s}$ = précongestion du réseau de transit du site r vers le site s

Pour déterminer les différents états de précongestion, l'équipement actif 30 du système de contrôle du site $C_i$ effectue les calculs suivants :

Calcul des états de précongestion du site central $C_i$ :

Si $(Teg_i) <= BW_{eg;i} * (1- M_{eg})$, Alors
$PC_{eg;i}$ = FAUX ; Sinon $PC_{eg;i}$ = VRAI
Si $(Tig_i) <= BW_{ig;i} * (1- M_{ig})$, Alors
$PC_{ig;i}$ = FAUX, Sinon $PC_{ig;i}$ = VRAI

Calcul des états de précongestion du site distant $D_m$ :

Si $(Teg_m)$ <= $BM_{eg;m}$ * (1- $M_{eg}$), Alors
$PC_{eg;m}$ = FAUX ; Sinon $PC_{eg;m}$ = VRAI
Si $(Tig_m)$ <= $BW_{ig;m}$ * (1- $M_{ig}$), Alors
$PC_{ig;m}$ = FAUX, Sinon $PC_{ig;m}$ = VRAI

Calcul des états de précongestion entre le site central $C_i$ et le site distant $D_m$ :

Si $(TC_iD_m)$ <= $BW_{i;m}$ * (1- $M_{i;m}$ ), Alors $PC_{i;m}$ = FAUX ;
Sinon $PC_{i;m}$ = VRAI
Si $(TD_mC_i)$ <= $BW_{m;i}$ * (1- $M_{m;i}$ ), Alors $PC_{m;i}$ = FAUX,
Sinon $PC_{m;i}$ = VRAI.

La figure 10 illustre schématiquement les points de congestion potentielle détectés.

Décision d'allouer les ressources

L'allocation des ressources consiste à déterminer la meilleure manière de réguler chacune des sessions entre les différents sites en fonction des différents états de précongestion et de la nature et du nombre de ces sessions.
Le trafic concernant chaque site central 12 ayant plusieurs lieux potentiel de précongestion, il peut donc y avoir plusieurs mécanismes d'allocation des ressources qui se superposent pour ce site.

- Détermination du besoin d'allouer les ressources

Dans les cas où il n'y a pas de précongestion, il n'est pas nécessaire d'allouer les ressources car la demande de trafic est inférieure à la capacité réseau.
Pour savoir s'il y a lieu d'allouer les ressources aux différentes sessions des utilisateurs l'équipement actif 30 du système de contrôle du site Ci effectue les calculs suivants :

- Détermination du besoin d'allouer les ressources pour l'accès au site central $C_i$ :

Si ($PC_{eg;i}$ = FAUX), alors pas de régulation des flux entrant dans $C_i$ ; sinon il faut réguler.
Si ($PC_{ig;i}$ = FAUX), alors pas de régulation des flux sortant de $C_i$ ; sinon il faut réguler.

- Détermination du besoin d'allouer les ressources pour l'accès au site distant $D_m$ :

Si ($PC_{eg;m}$ = FAUX), alors pas de régulation des flux entrant dans $D_m$ ; Sinon il faut réguler.
Si ($PC_{ig;m}$ = FAUX), alors pas de régulation des flux sortant de $D_m$ ; sinon il faut réguler.

- Détermination du besoin d'allouer les ressources entre le site central $C_i$ et le site distant $D_m$ :

Si ($PC_{i;m}$ = FAUX), alors pas de régulation des flux allant de $C_i$ à $D_m$ ; sinon il faut réguler.
Si ($PC_{m;i}$ = FAUX), alors pas de régulation des flux allant de $D_m$ à $C_i$ ; sinon il faut réguler.

Allocation de la bande passante

Le principe d'allocation de la ressource étant à ce stade identique pour les six différents points de congestion potentielle décrits précédemment, nous n'en décrirons qu'un en utilisant les indices généraux x et y tels que :
X, y = ig, eg, i (site central) ou m (site distant)
Lorsque $PC_{x;y}$ = VRAI, il y a un état de précongestion et donc il est nécessaire de réguler les flux et d'allouer la bande passante. Cette bande passante disponible est de valeur $BW_{x;y}$ et la marge relative de sécurité applicable est $M_z$. Le nombre de sessions actives pour la classe K est $S_{k;x;y}$.
Différentes politiques d'allocation de la bande passante sont possibles. A titre d'exemple un dispositif d'allocation par priorité relative attribuera à chaque session une part $BW_s$ de la bande passante $BW_{x;y}$ disponible (moins la marge) proportionnellement à un poids $P_k$ attribut de la classe k et à l'activité globale sur le point de congestion, par exemple avec la formule :

$$BW_s = BW_{x;y} * (1- M_z) * P_k * 1/\Sigma_k (P_k * S_{k;x;y})$$

En fonction de la politique d'allocation de bande passante retenue, chaque équipement actif 30 de site central génère les règle's de gestion (par session, par groupe de session, ...) correspondant à chaque point de congestion potentielle.

Selon une caractéristique fondamentale de l'invention :

- la détection des états de précongestion sur les sites distants 14 ne disposant pas d'équipement actif utilise une image du trafic de ce site qui est reconstituée à l'identique par chaque équipement actif 30 de site central 12 ;
- l'allocation de la bande passante concernant ces sites distants 14 est calculée par chaque équipement actif 30 de site central 12 en partant de l'image de la totalité du trafic, bien que seule une partie de ce trafic soit issue ou en provenance de ce site central 12.

Ceci permet la réalisation de la boucle de contre-réaction comportant les opérations suivantes : allocation de bande passante, mesure de trafic, détection de précongestion et allocation de bande passante.

Etape 6 - Conditionnement du trafic entrant et sortant par les sites centraux

Cette étape consiste, pour chaque équipement actif 30 de site central 12, à appliquer l'allocation de la bande passante comme calculée à l'étape précédente, pour le trafic effectif dont il a la charge, c'est-à-dire en provenance ou à destination de ce site central 12.

Le mécanisme de conditionnement doit avoir au moins les caractéristiques suivantes :

- être capable de réguler les flux issus du site central 12 et aussi les flux issus des sites distants 14 ;
- pouvoir fonctionner aux différents niveaux d'allocation de la bande passante (accès local, site distant 14, site central 12 à site distant 14).

Différents mécanismes sont envisageables pour conditionner le trafic. Parmi ceux-ci, on peut citer le mécanisme appelé « TCP rate control » utilisable si les flux de données sont échangés par le protocole TCP/IP, la gestion de file d'attente, par exemple « Class based queuing ». Ce dernier mécanisme fonctionne pour tout type de flux dans le sens site Central 12 vers site Distant 14, et pour des flux de type TCP/IP dans le sens site Distant 14 vers site Central 12.

La finesse de ces différents mécanismes est également variable.

Préférentiellement, le procédé selon l'invention utilise une solution de conditionnement du trafic qui permet de réguler au niveau de la session unitaire.

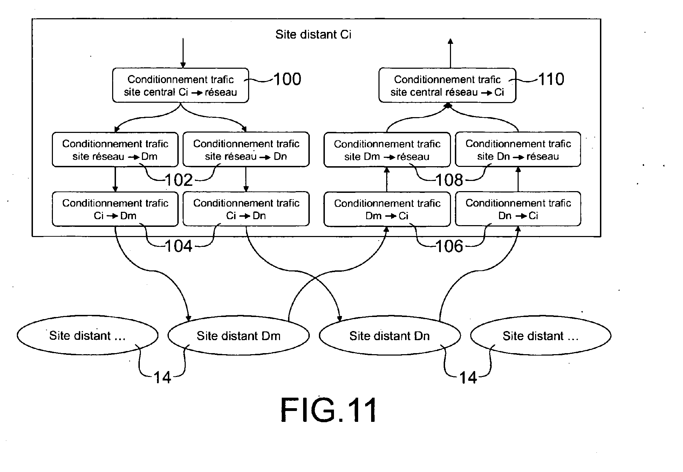

La figure 11 illustre l'enchaînement du mécanisme de conditionnement du trafic vu d'un site centrale 12.

Pour un trafic du central Ci vers le réseau 10, cet enchaînement comporte les opérations suivantes :

- conditionnement du trafic site central Ci vers réseau (étape 100).
- conditionnement du trafic réseau vers chaque site distant $D_m$ ; $D_n$ ; ... (étape 102).
- conditionnement du trafic site central Ci vers chaque site distant $D_m$ ; $D_n$ ; ... (étape 104).

Pour un trafic du réseau vers le central Ci 10, cet enchaînement comporte les opérations suivantes :

- conditionnement du trafic de chaque site distant $D_m$ ; $D_n$ ; ... vers le site central Ci (étape 106).
- conditionnement du trafic de chaque site distant $D_m$ ; $D_n$ ; ... vers le réseau (étape 108).
- conditionnement du réseau ver le site central Ci (étape 110).

La méthode et le dispositif proposé permettent l'allocation de la bande passante à partir d'un petit nombre de sites centraux 12 munis d'équipements actifs 30, tout en gérant des sites distants 14 (potentiellement en grand nombre), et particulièrement en cas de flux maillés.

L'invention permet d'éviter la nécessité d'installer un équipement actif 30 sur chaque site distant 14.

**Revendications**

1. Procédé de contrôle distant de la congestion de flux maillés échangés dans un réseau de télécommunication en mode paquet entre un nombre N de sites centraux $C_i$ (12) munis d'équipements actifs de gestion de flux et un nombre M de sites distants $D_m$ (14) dépourvus de tels équipements, lesdits sites centraux (12) échangeant entre eux des informations destinées spécifiquement à la gestion des flux échangés entre chacun des sites centraux (12) et chacun des sites distants (14), procédé **caractérisé en ce qu'**il comporte les étapes suivantes :

   - associer dynamiquement chaque site distant (14) à un sous-ensemble de sites centraux (12) en fonction du trafic réellement constaté,
   - établir une matrice de trafic dynamique indiquant, pour chaque site distant (14), le groupe de sites centraux (12) échangeant des données avec ce site distant (14) pendant une période d'observation donnée,
   - échanger entre les différents sites centraux (12) de chaque groupe des informations minimales sur le trafic temps réel avec chacun desdits sites distants (14),
   - définir à partir des informations échangées à l'étape précédente une image locale indiquant l'état de précongestion pour le trafic de chaque site distant (14),
   - calculer des règles de gestion du trafic de (respectivement vers) chaque site distant (14) en fonction de l'image définie à l'étape précédente.

2. Procédé selon la revendication 1, **caractérisé en ce que** ladite gestion des flux comporte les étapes préalables suivantes :

   - configurer automatiquement les équipements actifs de gestion de flux (30) des sites centraux (12) en fonction de ces regroupements dynamiques,
   - pour chaque site distant (14), coordonner lesdits équipements actifs (30) de manière à gérer en temps réel le trafic à destination ou en provenance des mêmes sites centraux vers/de ce site distant (14).

3. Procédé selon la revendication 2, **caractérisé en ce que,** pour chaque site distant (14) et pour chaque session d'échange de données de (respectivement vers) ce site distant (14), le calcul des règles de gestion du trafic est exécuté localement dans chaque site central (12) et comporte les étapes suivantes :

   - détecter des précongestions proches de la capacité maximale d'échange de (respectivement vers) ce site,
   - répartir les ressources de transmission entre les différentes sessions en fonction des états de précongestion détectée, de la nature et du nombre de ces sessions.

4. Procédé selon la revendication 1, **caractérisé en ce que** l'exécution de l'établissement d'une matrice de trafic dynamique est distribué entre les équipements actifs de gestion de flux (30) des différents sites centraux (12) de sorte que chaque site central $C_k$ :

   - détermine une liste de sites distants $D_m$ avec lesquels il a échangé de l'information pendant la période d'observation,
   - échange périodiquement ladite liste avec tous les autres sites centraux $C_i$ (12),
   - constitue une base $\{M_{im}\}$ d'information qui est la matrice sur l'ensemble des sites centraux $C_i$ (12) et des sites distants $D_m$ (14),
   - déduit, pour chaque site distant n (14), les sites centraux ($C_{kn}$) (12) avec lesquels ledit site distant n a échangé des informations pendant la durée d'observation considérée.

5. Procédé selon la revendication 1, **caractérisé en ce que** l'établissement de la matrice dynamique de trafic est exécutée périodiquement durant une première boucle de traitement ayant une durée adaptée pour établir une matrice de trafic agrégée tenant compte de la superposition de tous les types trafics pendant ladite période.

6. Procédé selon la revendication 1, **caractérisé en ce que** les échanges d'informations entre les sites centraux (12) et la définition d'une image locale indiquant l'état de précongestion sont exécutés périodiquement durant une deuxième boucle de traitement ayant une durée adaptée pour établir une matrice du trafic en temps réel de manière à détecter en temps réel les différents états de congestion.

7. Procédé selon la revendication 1, **caractérisé en ce que** le calcul des règles de gestion du trafic est exécuté périodiquement durant une troisième boucle de traitement ayant une durée très courte par rapport aux durées d'exécution des première et deuxième boucles de traitement de manière à réguler en temps réel le trafic en fonction du type et de la quantité de flux échangés entre les sites centraux (12) et les sites distants (14).

8. Procédé selon la revendication 1, **caractérisé en ce que** l'établissement d'une matrice de trafic dynamique est géré par un équipement de gestion centrale de la manière suivante :

- chaque équipement actif (30) de chaque site central (12) effectue une mesure d'activité pour le trafic entre lui-même et chaque site distant (14), pour les deux sens de communication.
- l'équipement de gestion centralisée relève périodiquement les informations de trafic sur les équipements actifs (30) de chaque site central (12),
- l'équipement de gestion centralisée en déduit pour chaque site distant (14) la liste des sites centraux (12) avec lesquels il échange des informations,
- l'équipement de gestion centralisée communique à l'équipement actif (30) de chaque site central (12) lesdites listes.

9. Procédé selon l'une des revendications 1 à 8, **caractérisé en ce que** le nombre N de sites centraux $C_i$ (12) est inférieur au nombre M de sites distants $D_m$ (14).

10. Dispositif de contrôle distant de la congestion de flux maillés échangés dans un réseau de télécommunication en mode paquet entre un nombre N de sites centraux $C_i$ (12) munis d'équipements actifs de gestion de flux (30) et un nombre M de sites distants $D_m$ (14) ne comportant pas de tels équipements, dispositif **caractérisé en ce qu'**il comporte :

- des moyens pour établir une matrice de trafic indiquant, pour chaque site distant (14), le groupe de sites centraux (12) échangeant des données avec ce site distant (14) pendant une période d'observation donnée,
- des moyens pour échanger entre les différents sites centraux (12) de chaque groupe des informations minimales sur le trafic temps réel avec chacun desdits sites distants (14),
- des moyens pour définir à partir des informations échangées une image locale indiquant l'état de congestion au niveau de chaque site distant (14),
- des moyens pour calculer et appliquer des règles de gestion du trafic de (respectivement vers) chaque site distant (14) en fonction de l'image définie.

11. Dispositif selon la revendication 10, **caractérisé en ce que** lesdits moyens pour établir une matrice de trafic sont agencés dans chaque site central (12).

12. Dispositif selon la revendication 10, **caractérisé en ce que** lesdits moyens pour établir une matrice de trafic sont agencés dans un équipement de gestion centrale agencé dans le réseau (10).

**Claims**

1. Method for remotely controlling the congestion of meshed flow exchanged in a packet mode telecommunication network between a number N of central sites $C_i$ (12) provide with active devices for managing flow and a number M of remote sites $D_m$ (14) devoid of such devices, said central sites (12) exchanging between them information intended specifically for managing the flow exchanged between each of the central sites (12) and each of the remote sites (14), method **characterised in that** it comprises the following steps:

- dynamically associating each remote site (14) to a subset of central sites (12) according to factual traffic observed,
- establishing a dynamic traffic matrix indicating, for each remote site (14), the group of central sites (12) exchanging data with this remote site (14) during a given observation period,
- exchanging between the different central sites (12) of each group of minimal information on the real time traffic with each of said remote sites (14),
- defining using the information exchanged in the previous step a local image indicating the state of pre-congestion for the traffic of each remote site (14),
- calculating the rules for managing traffic from (respectively to) each remote site (14) according to the image defied in the previous step.

2. Method set forth in claim 1, **characterised in that** said flow management comprises the following prior steps:

   - automatically configuring the active devices for managing flow (30) of the central sites (12) according to these dynamic regroupings,
   - for each remote site (14), coordinating said active devices (30) in such a way as to manage in real time the traffic going to or coming from the same central sites to/from this remote site (14).

3. Method set forth in claim 2, **characterised in that,** for each remote site (14) and for each session of exchanging data from (respectively to) this remote site (14), the calculation of the rules for managing traffic is executed locally in each central site (12) and comprises the following steps:

   - detecting pre-congestion that is close to the maximum exchange capacity from (respectively to) this site,
   - distributing the transmission resources between the different data exchange sessions according to the states of pre-congestion detected, the nature and the number of these sessions.

4. Method set forth in claim 1, **characterised in that** the execution of the establishment of a dynamic traffic matrix is distributed between the active devices for managing flow (30) of the different central sites (12) in such a way that each central site $C_k$:

   - determines a list of remote sites $D_m$ with which it has exchanged information during the observation period,
   - periodically exchanges said list with all of the other central sites $C_i$ (12),
   - constitutes a base $\{M_{im}\}$ of information which is the matrix on all of the central sites $C_i$ (12) and remote sites $D_m$ (14),
   - deduces, for each remote site n (14), the central sites $(C_{kn})$ (12) with which said remote site n has exchanged information during the duration of the observation period considered.

5. Method set forth in claim 1, **characterised in that** the establishment of the dynamic traffic matrix is executed periodically during a first processing loop having an adapted duration in order to establish an aggregate traffic matrix that takes into account the superposition of all of the traffic types during said period.

6. Method set forth in claim 1, **characterised in that** the exchanges of information between the central sites (12) and the definition of a locale image that indicates the state of pre-congestion are executed periodically during a second processing loop having a duration that is adapted to establish a traffic matrix in real time in such a way as to detect in real time the different states of congestion.

7. Method set forth in claim 1, **characterised in that** the calculation of the rules for managing traffic is executed periodically during a third processing loop having a very short duration in relation to the execution durations of the first and second processing loops in such a way as to adjust the traffic in real time according to the type and quantity of flow exchanged between the central sites (12) and the remote sites (14).

8. Method set forth in claim 1, **characterised in that** the establishment of a dynamic traffic matrix is handled by a central management device in the following way:

   - each active device (30) of each central site (12) carries out an activity measurement for the traffic between itself and each remote site (14), for the two directions of communication.
   - the centralised management device periodically collects the traffic information on all of the active devices (30) of each central site (12),
   - the centralised management device deduces, for each remote site (14) the list of the central sites (12) with which it exchanges information,
   - the centralised management device communicates said lists to the active device (30) of each central site (12).

9. Method according to any of claims 1 to 8, **characterised in that** the number N of central sites $C_i$ (12) is less than the number M of remote sites $D_m$ (14).

10. Device for remotely controlling the congestion of meshed flow exchanged in a packet mode telecommunication network between a number N of central sites $C_i$ (12) provided with active devices for managing flow (30) and a number M of remote sites $D_m$ (14) devoid of such devices, device **characterised in that** it comprises:

- means for establishing a traffic matrix indicating, for each remote site (14), the group of central 1 sites (12) exchanging data with this remote site (14) during a given observation period,
- means for exchanging between the different central sites (12) of each group of minimal information on the real time traffic with each of said remote sites (14),
- means for defining using information exchanged a local image indicating the state of congestion at the level of each remote site (14),
- means for calculating and applying the rules for managing traffic from (respectively to) each remote site (14) according to the image defined.

11. Device set forth in claim 10, **characterised in that** said means for establishing a traffic matrix are arranged in each central site (12).

12. Device set forth in claim 10, **characterised in that** said means for establishing a traffic matrix are arranged in a central management device arranged in the network (10).

**Patentansprüche**

1. Verfahren zum dezentralen Kontrollieren der Verstopfung vermaschter Flüsse, die in einem Telekommunikationsnetz im Paketmodus zwischen einer Anzahl N zentraler Standorte $C_i$ (12), die mit aktiven Mittel, zur Flussverwaltung versehen sind, und einer Anzahl M dezentraler Standorte $D_m$ (14), die keine derartigen Ausstattungen haben, ausgetauscht werden, wobei die zentralen Standorte (12) untereinander Informationen austauschen, die spezifisch für die Verwaltung der zwischen jedem der zentralen Standorte (12) und jedem der dezentralen Standorte (14) ausgetauschten Flüsse bestimmt sind, wobei das Verfahren **dadurch gekennzeichnet ist, dass** es die folgenden Schritte aufweist:

- dynamisches Verbinden jedes dezentralen Standorts (14) mit einer Untereinheit zentraler Standorte (12) in Abhängigkeit von dem tatsächlich festgestellten Verkehr,
- Erstellen einer dynamischen Verkehrsmatrix, die für jeden dezentralen Standort (14) die Gruppe zentraler Standorte (12) anzeigt, die Daten mit diesem dezentralen Standort (14) während einer gegebenen Beobachtungsperiode austauschen,
- Austauschen unter den verschiedenen zentralen Standorten (12) jeder Gruppe der Mindestinformationen über den Echtzeitverkehr mit jedem der dezentralen Standorte (14),
- ausgehend von den im vorhergehenden Schritt ausgetauschten Informationen, Definieren eines lokalen Bilds, das den Vorverstopfungszustand für den Verkehr jedes dezentralen Standorts (14) anzeigt,
- in Abhängigkeit von dem im vorhergehenden Schritt definierten Bild Berechnen der Verkehrsverwaltungsregeln von (respektive zu) jedem dezentralen Standort (14).

2. Verfahren nach Anspruch 1, **dadurch gekennzeichnet, dass** die Verwaltung der Flüsse die folgenden Vorabschritte aufweist:

- automatisches Konfigurieren der aktiven Ausstattungen zur Flussverwaltung (30) der zentralen Standorte (12) in Abhängigkeit von diesen dynamischen Gruppierungen,
- für jeden zentralen Standort (14) Koordinieren der aktiven Ausstattungen (30) derart, dass in Echtzeit der Verkehr zu oder von den gleichen zentralen Standorten zu/von diesem dezentralen Standort (14) verwaltet wird.

3. Verfahren nach Anspruch 2, **dadurch gekennzeichnet, dass** die Berechnung der Verkehrsverwaltungsregeln für jeden dezentralen Standort (14) und für jede Datenaustauschsession von (respektive zu) diesem dezentralen Standort (14) lokal in jedem zentralen Standort (12) ausgeführt wird und die folgenden Schritte aufweist:

- Erfassen der Vorverstopfungen nahe der maximalen Austauschkapazität von (respektive zu) diesem Standort,
- Verteilen der Übertragungsressourcen auf die verschiedenen Sessionen in Abhängigkeit von den erfassten Vorverstopfungszuständen, der Beschaffenheit und der Anzahl dieser Sessionen.

4. Verfahren nach Anspruch 1, **dadurch gekennzeichnet, dass** die Ausführung des Erstellens einer dynamischen Verkehrsmatrix auf die aktiven Flussverwaltungsausstattungen (30) der verschiedenen zentralen Standorte (12) derart verteilt wird , dass jeder zentraler Standort $C_i$:

- eine Liste dezentraler Standorte $D_m$ bestimmt, mit welchen er Information während der Beobachtungsperiode ausgetauscht hat,
- periodisch die Liste mit allen anderen zentralen Standorten $C_i$ (12) austauscht,
- eine Datenbank $\{M_{im}\}$ bildet, die die Matrix auf der Einheit der zentralen Standorte $C_i$ (12) und der dezentralen Standorte $D_m$ (14) ist,
- für jeden dezentralen Standort n (14) die zentralen Standorte ($C_{kn}$) (12) ableitet, mit welchen der dezentrale Standort n während der betreffenden Beobachtungsdauer Informationen ausgetauscht hat.

5. Verfahren nach Anspruch 1, **dadurch gekennzeichnet, dass** das Erstellen der dynamischen Verkehrsmatrix regelmäßig während einer ersten Verarbeitungsschleife ausgeführt wird, die eine angepasste Dauer hat, um eine gehäufte Verkehrsmatrix zu erstellen, die die Überlagerung aller Verkehrstypen während der Periode berücksichtigt.

6. Verfahren nach Anspruch 1**, dadurch gekennzeichnet, dass** die Informationsaustausche zwischen den zentralen Standorten (12) und die Definition eines lokalen Bilds, das den Vorverstopfungszustand anzeigt, periodisch während einer zweiten Verarbeitungsschleife ausgeführt werden, die eine Dauer hat, die angepasst ist, um eine Verkehrsmatrix in Echtzeit derart zu erstellen, dass in Echtzeit die verschiedenen Verstopfungszustände erfasst werden.

7. Verfahren nach Anspruch 1, **dadurch gekennzeichnet, dass** die Berechnung der Verkehrsverwaltungsregeln periodisch während einer dritten Verarbeitungsschleife ausgeführt wird, die eine sehr kurze Dauer im Vergleich zu den Ausführungsdauern der ersten und der zweiten Verarbeitungsschleife derart hat, dass in Echtzeit der Verkehr in Abhängigkeit von dem Typ und der Menge ausgetauschter Flüsse zwischen den zentralen Standorten (12) und den dezentralen Standorten (14) reguliert wird.

8. Verfahren nach Anspruch 1, **dadurch gekennzeichnet, dass** das Erstellen einer dynamischen Verkehrsmatrix von einer zentralen Verwaltungsausstattung wie folgt verwaltet wird:

   - jede aktive Ausstattung (30) jedes zentralen Standorts (12) führt eine Aktivitätsmessung für den Verkehr zwischen ihm selbst und jedem dezentralen Standort (14) für die zwei Kommunikationsrichtungen aus.
   - die zentrale Verwaltungsausstattung misst periodisch die Verkehrsinformationen auf den aktiven Ausstattungen (30) jedes zentralen Standorts (12),
   - die zentrale Verwaltungsausstattung leitet davon für jeden dezentralen Standort (14) die Liste der zentralen Standorte (12) ab, mit welchen er Informationen austauscht,
   - die zentrale Verwaltungsausstattung kommuniziert die Leisten an jede aktive Ausstattung (30) jedes dezentralen Standorts (12).

9. Verfahren nach einem der Ansprüche 1 bis 8, **dadurch gekennzeichnet, dass** die Anzahl N zentraler Standorte $C_i$ (12) kleiner ist als die Anzahl M dezentraler Standorte $D_m$ (14).

10. Vorrichtung zur dezentralen Kontrolle der Verstopfung vermaschter Flüsse, die in einem Telekommunikationsnetz im Paketmodus zwischen einer Anzahl N zentraler Standorte $C_i$ (12), die mit aktiven Ausstattungen zur Flussverwaltung (30) versehen sind, und einer Anzahl M dezentraler Standorte $D_m$ (14), die derartige Ausstattungen nicht haben, ausgetauscht werden, Vorrichtung **dadurch gekennzeichnet, dass** sie Folgendes aufweist:

    - Mittel zum Erstellen einer Verkehrsmatrix, die für jeden dezentralen Standort (14) die Gruppe zentraler Standorte (12) anzeigt, die Daten mit diesem dezentralen Standort (14) während einer gegebenen Beobachtungsperiode austauscht,
    - Mittel zum Austauschen zwischen den verschiedenen zentralen Standorten (12) jeder Gruppe von Mindestinformationen über den Echtzeitverkehr mit jedem der dezentralen Standorte (14),
    - Mittel zum Definieren ausgehend von den ausgetauschten Informationen eines lokalen Bilds, das den Verstopfungszustand auf dem Niveau jedes dezentralen Standorts (14) anzeigt,
    - Mittel zum Berechnen und Anwenden der Verkehrsverwaltungsregeln von (respektive zu) jedem dezentralen Standort (14) in Abhängigkeit von dem definierten Bild.

11. Vorrichtung nach Anspruch 10, **dadurch gekennzeichnet, dass** die Mittel zum Erstellen einer Verkehrsmatrix in jedem zentralen Standort (12) eingerichtet sind.

12. Vorrichtung nach Anspruch 10, **dadurch gekennzeichnet, dass** die Mittel zum Erstellen einer Verkehrsmatrix in einer zentralen Verwaltungsausstattung, die in dem Netz (10) eingerichtet ist, eingerichtet sind.

FIG.1

FIG.2

FIG.3

Réseau d'interconnexion
des sites

Equipement actif du
système

FIG.4

Réseau d'interconnexion
des sites

Equipement actif du
système

50

| Détermination de la matrice de trafic de/vers les sites distants | 62 |

52 — Constitution des groupes de coordination distance (RCG)

**FIG.5**

54 — Echange des informations sur le trafic au sein de chaque RCG — 64

56 — Constitution des images locales du trafic distant

58 — Calcul des règles de gestion du trafic de/vers chaque site distant — 66

60 — Conditionnement du trafic de/vers chaque site distant

| Site distant $D_m$ / Site central $C_i$ | $D_1$ | $D_2$ | $D_3$ | $D_4$ | $D_5$ | $D_6$ |
|---|---|---|---|---|---|---|
| $C_1$ | 1 | 1 | 1 | 0 | 0 | 0 |
| $C_2$ | 1 | 1 | 1 | 1 | 1 | 1 |
| $C_3$ | 0 | 0 | 1 | 0 | 1 | 1 |

Ligne Ci = liste des sites distants ayant du trafic avec le site central i

Colonne Dm = liste des sites centraux ayant du trafic avec le site distant m

| Mim = 0 | pas de trafic entre Ci et Dm |
|---|---|
| Mim = 1 | trafic entre Ci et Dm |

**FIG.6**

Sites centraux (équipés)

C1    C2    C3

D1  D2  D3  D4  D5  D6

Sites distants (non équipés)

Constitution des Groupes de Coordination Distante :
- RCG D1: [C1; C2]
- RCG D2: [C1; C2]
- RCG D3: [C1; C2; C3]
- RCG D4: [C2]
- RCG D5: [C2; C3]
- RCG D6: [C2; C3]

**FIG.7**

| 70 | 72 | 74 | 76 | 78 |
|---|---|---|---|---|
| Filtrage optionnel des variable issues des autre sites centraux du RCG | Consolidation des variables (débit et nombre de sessions par classe de trafic) | Constitution de l'image ID de l'activité du site distant | Filtrage optionnel des constituants de l'image ID | Constitution de l'image filtrée IDF de l'activité du site distant |

# FIG.8

| 80 | 82 | 88 | 90 |
|---|---|---|---|
| Mesure du trafic sur le point potentiel de congestion | Détection de l'état de précongestion | Pas nécessaire d'allouer la bande passante | Suppression des règles de gestion du trafic |

Non →

Oui →

| 84 | 86 |
|---|---|
| Besoin d'allouer la bande passante en ce point | Génération des règles de gestion du trafic |

# FIG.9

FIG.10

Site distant Ci

Conditionnement trafic
site central Ci → réseau  ⟋100

Conditionnement trafic
site central réseau → Ci  ⟋110

Conditionnement trafic
site réseau → Dm

Conditionnement trafic
site réseau → Dn

Conditionnement trafic
site Dm → réseau

Conditionnement trafic
site Dn → réseau

⟍102⟋

⟍108⟋

Conditionnement trafic
Ci → Dm

Conditionnement trafic
Ci → Dn

Conditionnement trafic
Dm → Ci

Conditionnement trafic
Dn → Ci

⟍104⟋

⟍106⟋

Site distant ...

Site distant Dm

Site distant Dn

Site distant ...

⟍14⟋

⟍14⟋

# FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004066567 A
- WO 0180485 A
- FR 2804808